# EUROPEAN PATENT SPECIFICATION

(11) **EP 1 665 246 B1**
(45) Date of publication and mention of the grant of the patent: **27.02.2008**
(21) Application number: 04769823.8
(22) Date of filing: 19.08.2004
(51) Int. Cl.: G11B 7/24, G11B 7/26

(54) **MULTI-LAYER OPTICAL DISC AND ITS MANUFACTURING METHOD**
MEHRSCHICHTIGER OPTISCHER DATENTRÄGER UND VERFAHREN ZU SEINER HERSTELLUNG
DISQUE OPTIQUE MULTICOUCHE ET SON PROCEDE DE FABRICATION

(30) Priority: 02.09.2003 CN 03157990
(43) Date of publication of application: 07.06.2006
(73) Proprietor: Koninklijke Philips Electronics N.V., 5621 BA Eindhoven (NL)
(72) Inventor: TANG, Fulong Philips Electronics China 21/F Kerry, Shanghai 200070 (CN); CHEN, Dianyong Philips Electr. China 21/F Kerry, Shanghai 200070 (CN); TAO, Jin Philips Electronics China 21/F Kerry, Shanghai 200070 (CN)
(74) Representative: Uittenbogaard, Frank
(86) International application number: PCT/IB2004/051488
(87) International publication number: WO 2005/022523

(56) References cited:
- EP-A- 1 302 934
- US-A- 4 481 620
- US-A- 5 768 221
- PATENT ABSTRACTS OF JAPAN vol. 011, no. 243 (P-603), 8 August 1987 (1987-08-08) & JP 62 052739 A (CANON INC), 7 March 1987 (1987-03-07)
- PATENT ABSTRACTS OF JAPAN vol. 012, no. 087 (M-678), 19 March 1988 (1988-03-19) & JP 62 227790 A (TOSHIBA CORP), 6 October 1987 (1987-10-06)

## Description

### Technical Field

The present invention relates to an optical disc and its manufacturing method, specifically to a multi-layer optical disc and its corresponding manufacturing method.

### Technical Background

With the development of the optical storage technology, there are existing more and more optical discs for storing (recording) data information, such as DVD, VCD, CD, etc. In these optical discs, DVD, VCD, CD, etc. are classified and named according to different standards specified for the optical discs. However, the optical discs can also be classified as the one-recording-layer optical disc and the multi-recording-layer optical disc according to their physical structures, and the dual-recording-layer optical disc is the most common one in the multi-recording-layer ones. Compared with the one-layer optical disc, the dual-layer optical disc is more complicated not only in the physical structure but also in the corresponding manufacturing process.

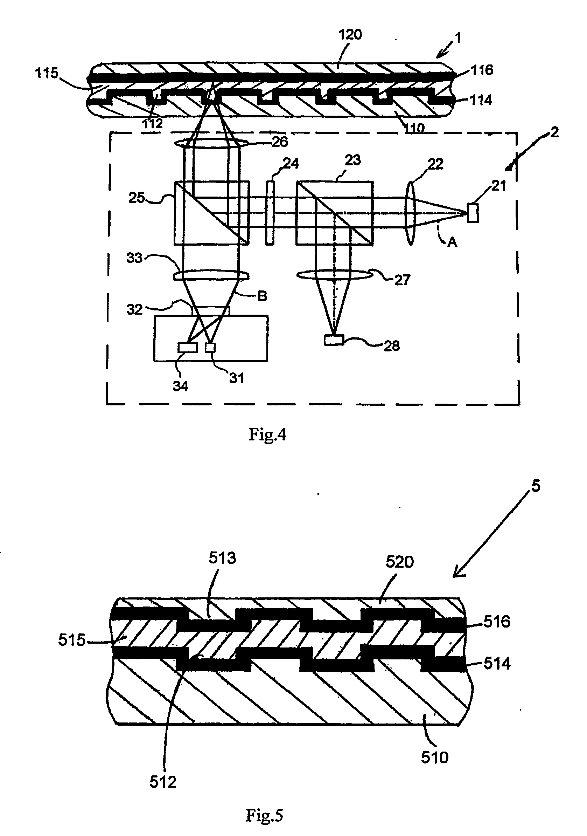

Fig.5 shows a kind of dual-layer optical disc 5 manufactured using the 2P ( Photo-Polymerization) process, comprising substrate 510, first recording layer 514, in-between layer 515, second recording layer 516 and protecting layer 520 in sequence, wherein first pre-recorded groove 512 and second pre-recorded groove 513 are formed on substrate 510 and in-between layer 515 respectively. First recording layer 514 and second recording layer 516 become undulate along first pre-recorded groove 512 and second pre-recorded gr oove 513 respectively, so that the undulation is used to position the optical head, to trace the address, to control rotating speed of the optical disc and so on. Both first recording layer 514 and second recording layer 516 include many sub-layers, such as first dielectric layers, functioning layers, second dielectric layers, metallic reflecting layers (or semi-reflecting layers), etc. (not shown in the drawings).

The above-mentioned first pre-recorded groove 512 and second pre-recorded groove 513 in dual-layer optical disc 5 are formed by mould-pressed substrate 510 and in-between layer 515 respectively with conventional nick el stamper. If another recording layer is required to be added on the dual-layer disc 5, the stamper must be used once more, that is, the stamper must be used once more when a new recording layer is required to be added on the optical disc. Therefore, it is obvious that the manufacturing process becomes complex, the productivity is reduced, and the production cost is increased.

Furthermore, during the multiple mould-pressing processes, it is difficult to register accurately the positions of the stamper between the preceding mould-pressing and the subsequent mould-pressing, which is liable to cause failures in the mould-pressing processes and reduce throughput.

Moreover, second pre-recorded groove 513 on in-between layer 515 in dual-layer optical disc 5 made using 2P process needs to be solidified by ultraviolet radiation after being mould-pressed. However, the ultraviolet radiation can penetrate neither first recording layer 514 including the metallic reflecting layer nor the conventional nickel stamper. Therefore it's difficult to solidify the second pre-recorded groove on the in-between layer.

In order to solve the problem, the plastic stamper is usually used to replace the nickel stamper, so that the ultraviolet radiation can penetrate the stamper and solidify the second pre-recorded groove. However, the plastic stamper has much limited service lifespan and poor demoulding property, so that the throughput is rather low and it is hard to realize the commercialized production.

Document US 4,481,620 describes an optical-disk having a single recording layer and a transparent substrate which has a surface in which a tracking groove is formed.

Therefore, there is a need for an improved optical disc and its manufacturing method to avoid the above-mentioned disadvantages.

### Summary of the invention

An object of the invention is to provide a simply structured optical disc.

A further object of the invention is to provide a method for manufacturing the optical discs with the low cost and the simple process.

The object of the invention for solving the technical problems is realized by implementing the technical solution of claim 1. The optical disc according to the invention comprises a first layer, a second layer and an in between layer between the first layer and the second layer, wherein the surface of the first layer is formed so as to become undulate and contains some material used to record the data information thereon, whereas the surface of the second layer is substantially flat and smooth and contains some material used to record the data information thereon with reference to the undulation of the first layer.

The optical disc according to the invention is realized by implementing the following technical process: forming a first layer with an undulate surface; forming an in-between layer on the surface of the first layer; and forming a second layer with a substantially flat and smooth surface on the in-between layer, wherein the first layer contains some material used to record the data information thereon, the second layer contains some material used to record the data information thereon with reference to the undulation of the first layer.

According to the technical solution of the invention, in the optical disc of the invention only one layer for recording the data information becomes undulate, and other layers for recording the data information are substantially flat and smooth, with which the in-between layers are coated directly and respectively, so that it is unnecessary that the stamper must be used once more when a new recording layer is required to be added on the optical disc, not only saving the stampers, but also increasing the productivity and reducing the production cost.

### Brief Description of the Drawings

Fig.1 is a sectional view of the optical disc according to the first embodiment of the invention;
Fig.2A, Fig.2B, Fig.2C, Fig.2D and Fig.2E are the sectional views showing the manufacturing processes of the optical disc according to the first embodiment of the invention;
Fig.3 is a sectional view of the optical disc according to the second embodied of the invention;
Fig.4 is a schematic drawing showing the process of recording the data information onto the optical disc according to the first embodiment;
Fig.5 is a sectional view of an optical disc in the prior art.

### Detailed Description of the Invention

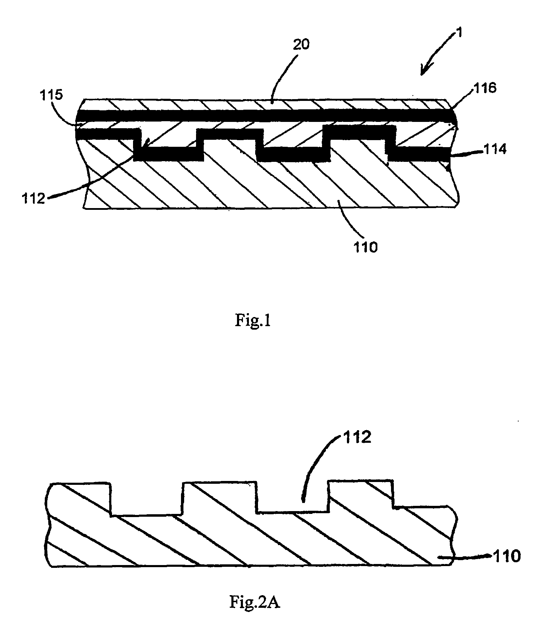

The embodiments of invention will be further described with reference to the accompanying drawings. Fig.1 shows an optical disc according to the first embodiment of the invention. Optical disc 1 of th e embodiment comprises substrate 110 and protecting layer 120. Substrate 110 comprises pre-recorded groove 112 integrally formed by mould-pressing. The surface of pre-recorded groove 112 on substrate 110 is coated with first recording layer 114, and first recording layer 114 is formed to become undulate along pre-recorded groove 112 to position the optical head, to trace the address, to control the rotating speed of the optical disc and so on by the undulation. In-between layer 115 is provided further on first recording layer 114. In-between layer 115 is a transparent glutinous layer, so that it will substantially fill and level up the undulation on first recording layer 114. The top surface of in-between layer 115 is coated with second recording layer 116 having a substantially flat and smooth surface, so that positioning the optical head, tracing the address and controlling the rotating speed of the optical disc should be implemented with reference to first recording layer 114 when the data information is recorded onto second recording layer 115. Protecting layer 120 covers second recording layer 116.

Both first recording layer 114 and second recording layer 116 of optical disc 1 include many sub-layers, such as first dielectric layers, functioning layers, second dielectric layers, reflecting layers (or semi-reflecting layers), etc., the same structure as the recording layer of optical disc in the prior art, thus not shown in the drawings.

In these structures of respective layers of optical disc 1, substrate 110 is generally formed of polycarbonate, or of glass, PMMA or other organic material.

In the respective sub-layers contained in first recording layer 114 and second recording layer 116, the reflecting layer (or the semi-reflecting layer) can be formed of gold, silver, aluminum, etc.; the dielectric layer can be mainly formed of SiO-ZnS, Si3N4, SiC, etc.; the functioning layer can usually be formed of the one-off recording materials or the erasable recording materials, the one-off recording material usually can be the dyestuff, such as dye, phthalocyanine, azo, etc., the erasable recording material can be phase-change alloy or photochromic molecules.

In-between layer 115 is generally formed of transparent resin. Protecting layer 120 is mainly formed of UV cured lacquer. Protecting layer 120 can be formed of the same material as substrate 110.

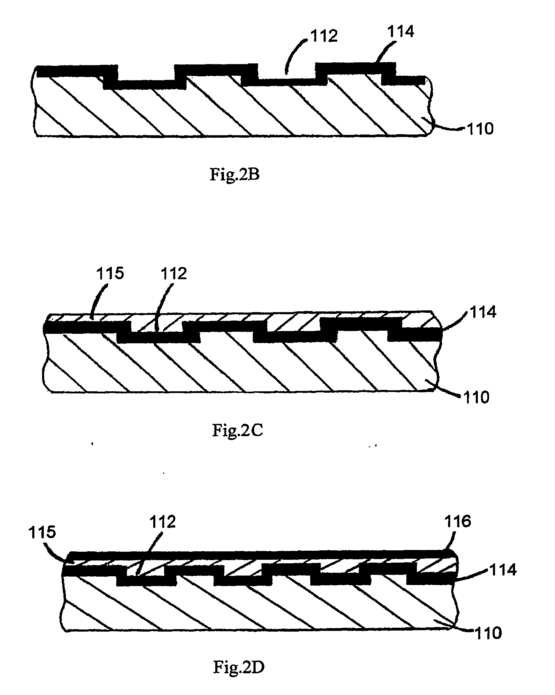

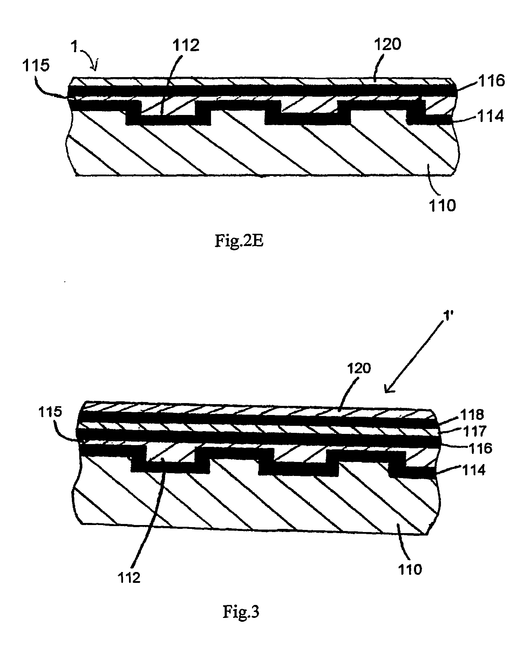

Fig.2A to Fig.2E are flow charts showing the manufacturing processes of optical disc 1 of the first embodiment. When manufacturing optical disc 1, firstly, pre-recorded groove 112 is formed on substrate 110 by mould-pressing; secondly, the surface of pre-recorded groove 112 in substrate 110 is coated with first recording lay er 114 which becomes undulate along pre-recorded groove 112 ; thirdly, first recording layer 114 is coated with in-between layer 115 which will substantially fill and level up the undulation on first recording layer 114 to make the top surface of the in-between layer substantially flat and smooth; then, the top surface of in-between layer 115 is coated with substantially flat and smooth second recording layer 115; and finally, protecting layer 120 is further stuck and attached on substantially flat and smooth second recording layer 116, completing the manufacture of optical disc 1.

Aforementioned optical disc 1 is only an embodiment of th e invention. Optical disc 1 has only two recording layers, in fact, second recording layer 116 can be coated with another in-between layer 117, as shown in Fig.3; then the surface of in-between layer 117 is further coated with substantively flat and smooth third recording layer 118; and then protecting layer 120 is stuck and attached on the substantively flat and smooth third recording layer so as to form three-recording-layer disc 1' as shown in Fig.3. Similarly, four-recording-layer optical disc, even five-recording-layer or six-recording-layer optical disc can also be made, thereby the multi-recording-layer optical discs can be manufactured using a very simple method.

In the optical disc of the invention only one layer for recording the data information becomes undulate, and other layers for recording the data information are substantially flat and smooth, with which the in-between layer are coated directly and respectively, so that it is unnecessary that the stamper must be used once more when a new recording layer is required to be added on the optical disc, not only saving the stampers, but also increasing the productivity and reducing the production cost.

How to read the data information from and how to record the data information onto the optical disc of the invention will be described with respect to optical disc 1 according to the first embodiment of the invention.

The method for reading the data information from optical disc 1 according to the first embodiment of the invention is the same as that used in the dual-layer optical disc in the prior art; and the method for recording the data information onto first recording layer 114 having the undulate surface of dual-layer optical disc 1 is the same as that used in the dual-layer optical disc in the prior art.

However, the method for recording the data information onto second recording layer 116 of optical disc 1 is different from the one for recording the data information onto the dual-layer optical disc in the prior art. The reason is that the surface of second recording layer 116 is flat and smooth, the address information can not be traced, so that an optical device 2 similar to that as shown in Fig.4 must be used to realize recording of data information.

In optical device 2 shown in fig.4, data laser beam A transmitted by first semiconductor laser device 21 passes through first collimating lens 22, polarizing spectroscope 23, quarter-wave plate 24, double-tone spectroscope 25 and object lens 26 in sequence, then is reflected back after reaching second recording layer 116 of optical disc 1, and then reaches photo-electric converter 28 through detector lens 27. However, the surface of second recording layer 116 is flat and smooth, the address can not be traced, so that it is impossible to record the data information onto second recording layer 116 only by data laser beam A, therefore, service laser beam B is added in optical device 2 to assist data laser beam A to record the data information onto second recording layer 116. Service laser beam B is transmitted by second semiconductor laser device 31 which is on only when the data information is recorded onto substantially flat and smooth second recording layer 116, passes through holographic grating 32, second collimating lens 33, double-tone spectroscope 25 in sequence, and then passes through object lens 26 along with data laser beam A, wherein service laser beam B is focused on first recording layer 114 to trace the address information on first recording layer 114 so as to assist data laser beam A incident on second recording layer 116 to record the data information onto second recording layer 116. When being reflected back, service laser beam B is deflected to second photo-electric converter 34 through holographic grating 32.

When the data information has been recorded onto substantially flat and smooth second recording layer 116, the address information can be stored by means of the physical change of second recording layer 116, so that service laser beam B is unnecessary when reading the data information.

While the present invention is described with reference to the specific embodiment, it is apparent for those skilled in the art to make some alternatives, modifications and changes according to above description. All of these alternatives, modifications and changes should be included in the present invention when they fall in the spirit and the scope of the appendent claims.

## Claims

1. An optical disc (1), comprising:
a first layer (114), with its surface undulant, which includes material used to record information;
a second layer (116), with its surface basically flat, which includes material used to record information referring to the undulation of the first layer; and
an in-between layer (115), which lies between the first layer and the second layer.

2. The optical disc according to claim 1, further comprising a substrate (110), wherein the first layer (114) lies on said substrate.

3. The optical disc according to claim 2, wherein said substrate (110) has pre-recorded groove (112) and said first layer (114) is undulant along the pre-recorded groove (112).

4. The optical disc according to claim 1, further comprising a protecting layer (120), said protecting layer (120) covering said second layer (116).

5. An optical disc manufacturing method, comprising the steps of:
(a) forming a first layer (114) with its surface undulant on a substrate (110), said first layer (114) including material used to record information;
(b) forming an in-between layer (115) on the first layer (114);
(c) forming a second layer (116) with its surface basically flat on the in-between layer (115), the second layer (116) including material used to record information referring to the undulation of the first layer (114).

6. The optical disc manufacturing method according to claim 5, wherein said substrate (110) has pre-recorded groove (112), and the first layer (114) is undulant along the pre-recorded groove (112).

7. The optical disc manufacturing method according to claim 5 or 6, further comprising forming a protecting layer (120) on the second layer (116).

8. An optical disc recording method, wherein the optical disc (1) has a first layer (114) with its surface undulant, a second layer (116) with its surface mainly flat and an in-between layer (115) which lies between the first layer and the second layer, said optical disc recording method comprising the steps of :
recording the first layer (114) of the optical disc; and
recording the second layer (116) of the optical disc referring to the first layer.

## Patentansprüche

1. Optische Platte (1), die Folgendes umfasst:
eine erste Schicht (114) mit wellenförmiger Oberfläche, die Material umfasst, das zur Aufzeichnung von Informationen verwendet wird,
eine zweite Schicht (116) mit im Wesentlichen ebener Oberfläche, die Material umfasst, das zur Aufzeichnung von Informationen unter Bezug auf die Wellenform der ersten Schicht verwendet wird, und
eine Zwischenschicht (115), die zwischen der ersten Schicht und der zweiten Schicht liegt.

2. Optische Platte (1) nach Anspruch 1, die ferner ein Substrat (110) umfasst, wobei die erste Schicht (114) auf dem Substrat liegt.

3. Optische Platte nach Anspruch 2, bei der das Substrat (110) eine Vorspur (112) hat und die erste Schicht (114) entlang der Vorspur (112) wellenförmig ist.

4. Optische Platte nach Anspruch 1, die ferner eine Schutzschicht (120) umfasst, wobei die Schutzschicht (120) die zweite Schicht (116) bedeckt.

5. Verfahren zur Herstellung optischer Platten, das die folgenden Schritte umfasst:
(a) Bilden einer ersten Schicht (114) mit wellenförmiger Oberfläche auf einem Substrat (110), wobei die erste Schicht (114) Material umfasst, das zur Aufzeichnung von Informationen verwendet wird,
(b) Bilden einer Zwischenschicht (115) auf der ersten Schicht (114),
(c) Bilden einer zweiten Schicht (116) mit im Wesentlichen ebener Oberfläche auf der Zwischenschicht (115), wobei die zweite Schicht (116) Material umfasst, das zur Aufzeichnung von Informationen unter Bezug auf die Wellenform der ersten Schicht (114) verwendet wird.

6. Verfahren zur Herstellung optischer Platten nach Anspruch 5, wobei das Substrat (110) eine Vorspur (112) hat und die erste Schicht (114) entlang der Vorspur (112) wellenförmig ist.

7. Verfahren zur Herstellung optischer Platten nach Anspruch 5 oder 6, das ferner das Bilden einer Schutzschicht (120) auf der zweiten Schicht (116) umfasst.

8. Verfahren zur Aufzeichnung auf optische Platten, bei dem die optische Platte (1) eine erste Schicht (114) mit wellenförmiger Oberfläche, eine zweite Schicht (116) mit überwiegend ebener Oberfläche und eine Zwischenschicht (115) hat, die zwischen der ersten Schicht und der zweiten Schicht liegt, wobei das Verfahren zur Aufzeichnung auf optische Platten die folgenden Schritte umfasst:
Aufzeichnen auf der ersten Schicht (114) der optischen Platte, und
Aufzeichnen auf der zweiten Schicht (116) der optischen Platte unter Bezug auf die erste Schicht.

## Revendications

1. Disque optique (1) comprenant:
une première couche (114) avec sa surface ondulée qui comprend du matériau qui est utilisé pour enregistrer de l'information;
une deuxième couche (116) avec sa surface fondamentalement plate comprenant du matériau qui est utilisé pour enregistrer de l'information se rapportant à l'ondulation de la première couche; et
une couche intermédiaire (115) qui se situe entre la première couche et la deuxième couche.

2. Disque optique selon la revendication 1 comprenant encore un substrat (110) dans lequel la première couche (114) se situe sur ledit substrat.

3. Disque optique selon la revendication 2 dans lequel ledit substrat (110) présente une rainure préenregistrée (112) et ladite première couche (114) est ondulée le long de la rainure préenregistrée (112).

4. Disque optique selon la revendication 1 comprenant encore une couche protectrice (120), ladite couche protectrice (120) couvrant ladite deuxième couche (116).

5. Procédé de fabrication du disque optique comprenant les étapes consistant à:
(a) former une première couche (114) avec sa surface ondulée sur un substrat (110), ladite première couche (114) comprenant du matériau qui est utilisé pour enregistrer de l'information;
(b) former une couche intermédiaire (115) sur la première couche (114);
(c) former une deuxième couche (116) avec sa surface fondamentalement plate sur la couche intermédiaire (115), la deuxième couche (116) comprenant du matériau qui est utilisé pour enregistrer de l'information se rapportant à l'ondulation de la première couche (114).

6. Procédé de fabrication du disque optique selon la revendication 5 dans lequel ledit substrat (110) présente une rainure préenregistrée (112) et la première couche (114) est ondulée le long de la rainure préenregistrée (112).

7. Procédé de fabrication du disque optique selon la revendication 5 ou 6 comprenant encore la formation d'une couche protectrice (120) sur la deuxième couche (116).

8. Procédé d'enregistrement du disque optique dans lequel le disque optique (1) présente une première couche (114) avec sa surface ondulée, une deuxième couche (116) avec sa surface principalement plate et une couche intermédiaire (115) qui se situe entre la première couche et la deuxième couche, ledit procédé d'enregistrement du disque optique comprenant les étapes consistant à:
enregistrer la première couche (114) du disque optique; et
enregistrer la deuxième couche (116) du disque optique se rapportant à la première couche.
